# EUROPEAN PATENT SPECIFICATION

(11) **EP 3 620 708 B1**
(45) Date of publication and mention of the grant of the patent: **05.08.2026**
(21) Application number: 19195498.1
(22) Date of filing: 05.09.2019
(51) Int. Cl.: F16L 3/10, F16L 3/22

(54) **A PORTABLE SUPPORT FOR MANIPULATING CABLES**
TRAGBARER TRÄGER ZUR HANDHABUNG VON KABELN
SUPPORT PORTATIF DE MANIPULATION DE CÂBLES

(30) Priority: 06.09.2018 FI 20185745
(43) Date of publication of application: 11.03.2020
(73) Proprietor: Vicera Oy, 37570 Lempäälä (FI)
(72) Inventor: Ahola, Jyri, 33880 Lempäälä (FI)
(74) Representative: Koivisto, Harri Kristian

(56) References cited:
- WO-A1-2016/154270
- CN-A- 106 711 875
- CN-A- 108 321 735

## Description

### BACKGROUND

The present invention relates to installation of electric cables. More precisely, an apparatus specially adapted for installing, maintaining, repairing, or dismantling electric cables or lines is disclosed.

Manipulating electric cables, such as medium voltage underground cables occurs often in the field, in various conditions. Cables must be continued or repaired at random locations. As one example, medium voltage underground cables are rigid, heavy and difficult to handle manually. Connecting joints or terminations require several meticulous steps to ensure full conductivity and safe insulation. The cable cannot touch ground during the process, otherwise dirt could destroy the joint and result to potentially dangerous electric connection.

Electricians must use reliable supports that may be carried to the site. The portable support faces several technical problems; the device must be light to be portable, sturdy to withstand the forces during manipulation of the cables and easy to use.

CN106711875A discloses a power cable support, comprising a pedestal and a tripod. The top of the pedestal is provided with a vertical telescoping rod, and the top of the vertical telescoping rod is rotatingly connected with a lower supporting plate through a bearing. The top surface of the lower supporting plate is provided with a plurality of bar-shaped grooves, and a clamping plate is disposed exactly above each bar-shaped groove. The clamping plates are connected with the upper supporting plate through top telescoping rods.

CN108321735A discloses a power line support. The system features separate platforms for high-voltage and low-voltage lines, each equipped with adjustable sliding rails and rotating support brackets, which prevent line tangling and enable precise positioning.

WO2016/154270 shows a cable splicing support apparatus designed for securing cables in enclosed spaces, such as conduits or tunnels. It features an adjustable support bar with two support members, a locking mechanism, and a splicing platform that securely holds the cable to prevent contamination during splicing.

### SUMMARY

A portable support for manipulating cables has a stand configured to keep the portable support in upright position. Three fasteners for the electric cable are arranged on a horizontal bar. The cables are fixed along a groove that maintains the position of the cable perpendicular to the horizontal bar.

As an example, when the medium voltage underground cable is jointed or terminated, all three phases may be handled simultaneously. The electrician may execute all steps of the process into all cables with all the tools required for the process step. Examples of such steps include applying mastic to the joint or wrapping insulation tape over the joint. This expedites the process and reduces possibilities for errors.

Many of the attendant features will be more readily appreciated as they become better understood by reference to the following detailed description considered in connection with the accompanying drawings. The embodiments described below are not limited to implementations which solve any or all the disadvantages of known cable supports.

### BRIEF DESCRIPTION OF THE DRAWINGS

The present description will be better understood from the following detailed description read in light of the accompanying drawings, wherein
FIG. 1 illustrates schematically a side view of one exemplary embodiment of a portable support, which is not according to the invention and is present for illustration purposes only;
FIG. 2 illustrates schematically one exemplary embodiment of a fastener; this embodiment is not according to the invention and is present for illustration purposes only;
FIG. 3 illustrates schematically one exemplary embodiment of the fastener;
FIG. 4a illustrates schematically one exemplary embodiment of a stand;
FIG. 4b illustrates schematically the stand in another position;
FIG. 5 illustrates schematically a side view of one exemplary embodiment of the portable support; and
FIG. 6 illustrates schematically a side view of one exemplary embodiment of the portable support, which is not according to the invention and is present for illustration purposes only.

Like reference numerals are used to designate like parts in the accompanying drawings.

### DETAILED DESCRIPTION

The detailed description provided below in connection with the appended drawings is intended as a description of the present examples and is not intended to represent the only forms in which the present example may be constructed or utilized. However, the same or equivalent functions may be accomplished by different examples.

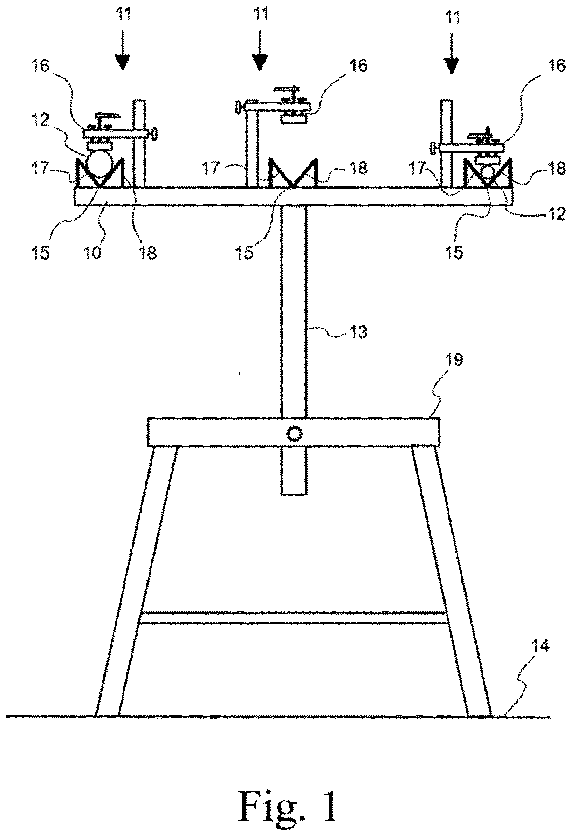

FIG. 1 illustrates schematically a side view of one exemplary embodiment of a portable support for manipulating cables. The portability of the support is defined by an ability to be carried by normal human being. The support lifts the cables to be manipulated from the ground level. Manipulation of the cable may include any action an electrician executes to a stripped cable, such as installing, maintaining, repairing, or dismantling the cable. One typical scenario for using the stand is manipulating the cable on a terrain, where the electrician has carried the portable stand to assist in the work. Sometimes the terrain may be difficult to pass, wherein all electrician's tools should be reliable and easy to carry.

A horizontal bar 10 is configured to support three cables 12, wherein the cables may be of varying size. A stand 13 is attached to the horizontal bar 10. The stand 13 may be vertical or skew, as the purpose of the stand 13 is to provide distance between the ground 14 and the horizontal bar 10. Further purpose of the stand 13 is to maintain stability of the portable support. The stand 13 may comprise tripod configuration or it may be connectable to separate supporting structure 19 providing contact to the ground 14. The stand 13 height may be adjustable, for example by the attachment to the supporting structure 19.

The horizontal bar 10 comprises three fasteners 11. Each fastener 11 is configured to support one cable 12. In a three-phase cabling all three phases may be fastened simultaneously. Each fastener 11 comprises a groove 15 transverse to the horizontal bar 10. The groove 15 is configured to receive the cable 12 to be positioned above the groove 15. The groove 15 guides the direction of the cable 12. The groove 15 is a long and narrow channel in the fastener 11. In one exemplary embodiment the groove length is between 4 cm and 15 cm. The groove 15 enables directing the cable 12 to a desired direction. In one embodiment the groove 15 is sharp. The groove 15 may be formed for example from multiple parts welded together. In one embodiment the groove 15 has a rounded bottom. The groove 15 may be manufactured from a single sheet metal. The bottom portion of the groove 15 may not be in contact with the cable 12 having circular cross section, the contact point is a unidirectional or flat surface at both sides of the groove 15.

Each fastener 11 comprises a clamp 16, configured to press the cable 12 towards the groove 15. Each cable 12 is in transverse position to the horizontal bar 10 when tightened into the fastener 11. The clamp 16 is in one embodiment removable to allow larger opening for receiving the cable 12 onto the groove 15.

FIG. 1 illustrates clamps 16 in various positions, wherein the outermost clamps 16 hold different sized cables 12 and the middle clamp is fully opened.

According to the invention, the groove 15 is formed by two flat surfaces 17, 18 arranged into V-shape, opening upwards. The V-shape is configured to receive the cable 12. The clamp 16 and the two flat surfaces 17, 18 form three contact surface for the cable 12 when secured into the fastener 11. Width of the clamp 16 between the two flat surfaces 17, 18 may be arranged to allow minimum size cable to be clamped into the fastener 11. Surface of the cable 12 may conform slightly to the pressure applied by the contact surfaces, increasing the grip of the fastener 11. Flat surfaces are safe to the cable 12, having minimal risk for damaging the outer insulation layer. The triangular shape of the contact surfaces allows wide range of cable sizes to be used.

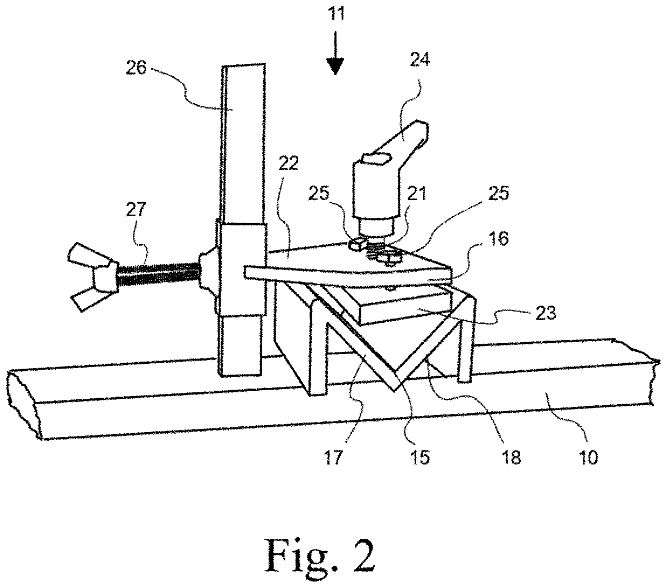

FIG. 2 illustrates one exemplary embodiment of the fastener 11. In one embodiment the clamp 16 is configured to tighten the received cable 12 from above. The cable 12 may rest on the groove 15 before the clamp 16 is tightened onto it. In one embodiment the fastener 11 comprises tightening means 21 for tightening the clamp 16 towards the groove 15. Tightening causes the clamp 16 to press the received cable 12 against the two flat surfaces 17, 18. In one embodiment the clamp 16 comprises a clamp body 22. The clamp body 22 carries the tightening means 21. The tightening means 21 comprise in this example a thread and a pressure pad 23 pad connected to the clamp body 22 via the tightening means 21. The tightening means 21 is configured to push the pressure pad 23 from the clamp body 22 towards the cable. The cable is not shown in FIG. 2. The pressure pad 23 surface may be flat or roughened to improve the grip.

In one embodiment the tightening means 21 comprise an adjustable clamping lever 24. The adjustable clamping lever 24 may be rotated to adjust the tightening means 21 along a threaded rod. The adjustable clamping lever 24 enables quick adjustment and quick tightening for the pressure pad 23. In one embodiment the tightening means 21 comprise at least one tightening bolt 25, configured to push the pressure pad 23 from the clamp body 22 towards the cable. The tightening bolts 25 may be tightened with a spanner. The tightening bolts 25 may further secure the grip of the fastener 11.

In one embodiment each fastener 11 comprises a vertical bar 26 for providing vertical adjustment for the clamp 16. In one embodiment the clamp body 22 is adjustably connected to the vertical bar 26. The clamp body 22 may be moved along the vertical bar 26, thereby adjusting the distance between the clamp 16 and the groove 15. The clamp body 22 may be secured to desired position, in this example by a wing screw 27. Moving the clamp body 22 up along the vertical bar 26 opens the gap into the groove 15 for larger cables. In the example of FIG. 2 the fastener angle is fixed.

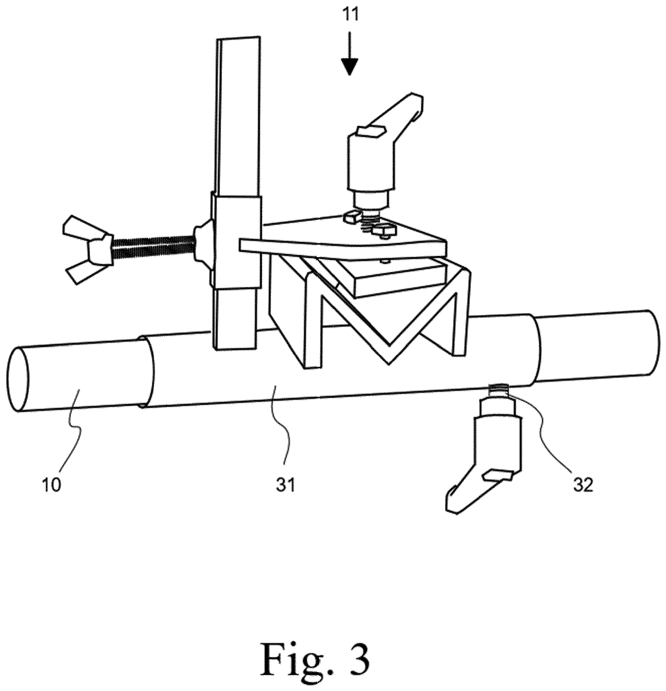

FIG. 3 illustrates one exemplary embodiment of the fastener 11 assembly according to the present invention. The fastener 11 is attached to the horizontal bar 10 via tubular member 31 configured to slide over the horizontal bar 10. Angle of the fastener 11 as it is being attached to the horizontal bar 10 is adjustable. The tubular member 31 is secured to the horizontal bar 10 with securing means 32, wherein the fastener 11 is rotatable along the horizontal bar 10 until the angle is fixed by the securing means 32.

Adjusting the angle and/or height of the support allows flexible cable manipulation. The cable 12 may be heavy and in some instances, when the cable 12 is operated in elevated position, a pit has to be dug under the cable in order to provide relief to the cable structure.

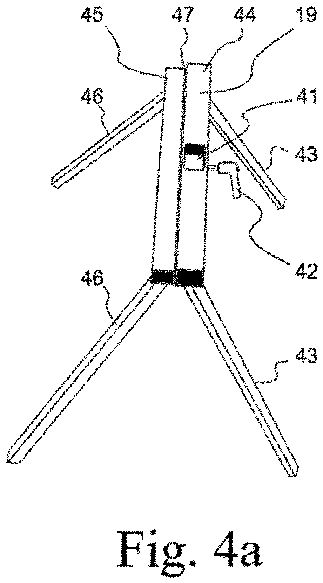

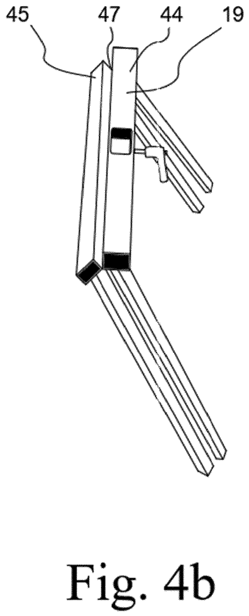

In one embodiment the stand 13 comprises foldable legs. In one embodiment the stand 13 comprises removable legs. The legs may be removable and foldable. FIG. 4a and FIG. 4b illustrate one exemplary embodiment of stand arrangement in two positions, wherein the supporting structure 19 is open in FIG. 4a. The stand 13 is inserted into the opening 41. The height of the stand 13 is adjusted by tightening the stand 13 into desired position with lever 42. During traveling the stand 13 may be in its lowest position. Alternatively, the stand 13 may be removed entirely from the supporting structure 19.

In one exemplary embodiment the supporting structure 19 comprises first bar 44, with two fixed legs 43. A second bar 45 comprises two fixed legs 46. A hinge 47 is arranged between the first bar 44 and the second bar 45. FIG. 4b illustrates the first bar 44 and the second bar 45 having rotated the supporting structure 19 into closed position.

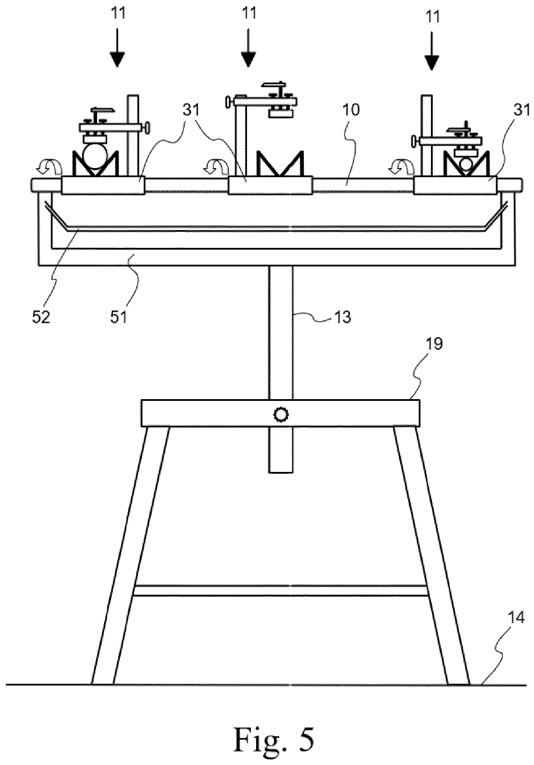

FIG. 5 illustrates schematically a side view of one exemplary embodiment of the portable support, according to the invention. The fastener 11 assembly having tubular members 31 according to FIG. 3 is illustrated in the complete portable support. Each of the three fasteners 11 are rotatable along the horizontal bar 10. The cable may be underground cable that has been partially dug up for fixing the cable or a connector. The cable may be very stiff and the angle in which it rises from the ground may be very steep. The maintenance personnel may not dig the cable from the ground more than necessary as the rest of the cable remains in the ground. The cable may be connected to the portable support at 90-degree angle, horizontally or at any angle in between. The horizontal bar 10 is in these examples round, enabling the fastener 11 to be fixed at any angle. In one embodiment the fastener 11 may be moved sideways along the horizontal bar 10. In one embodiment the horizontal bar 10 comprises horizontal grooves for improving the grip of the securing means 32, wherein the bolt or any other protruding part may be tightened into the horizontal groove. The horizontal bar 10 is connected to the stand 13 via a u-shaped support bar 51. The support bar 51 is connected to both ends of the horizontal bar 10, further ensuring that the fasteners 11 stay on the horizontal bar 10 even when the securing means 32 are loosened. The portable support may be used at rough terrain or under difficult conditions, where losing any parts could be annoying. An accessory bar 52 is attached to the support bar 51. The accessory bar 52 may be used for hanging various accessories during the assembly. Examples of such accessories are pliers, grinders or tape rolls.

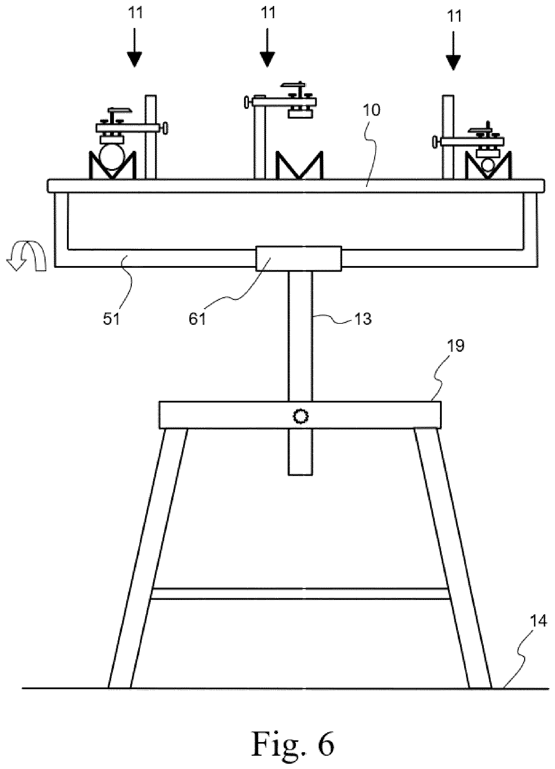

FIG. 6 illustrates schematically a side view of one exemplary embodiment of the portable support. In this example the whole upper structure of the support may be tilted. The support bar 51 is connected to the stand 13 via a stand tube 61, wherein the support bar 51 may secured to the stand tube at any angle. The fasteners 11 are in this example fixedly connected to the horizontal bar 10, causing all three fasteners 11 having their angles modified simultaneously. According to the invention, the fasteners 11 comprise tubular members 31, wherein each fastener 11 may be adjusted individually while the position of the horizonal bar may be adjusted via the stand tube 61.

In one embodiment the support is configured to receive three medium voltage underground cables. The medium voltage may range between 1 kV and 69 kV, without limiting the cable to this example range. In one example the received cable diameter is between 20 mm and 90 mm.

In one embodiment every surface that the cable 12 may touch have been rounded, thereby ensuring that the cable insulation layer remains intact in all operations. The distance between two adjacent fasteners 11 may be suitable for using cable tools. In one example the distance is 30 cm, not limiting the distance to this example. The support is in one example made of steel. In one example portions of the support are made of lighter materials, for example the stand 13 and/or the supporting structure 19 may be made of aluminium.

Any range or device value given herein may be extended or altered without losing the effect sought.

Although at least portion of the subject matter has been described in language specific to structural features and/or acts, it is to be understood that the subject matter defined in the appended claims is not necessarily limited to the specific features or acts described above. Rather, the specific features and acts described above are disclosed as examples of implementing the claims and other equivalent features and acts are intended to be within the scope of the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item refers to one or more of those items.

The term 'comprising' is used herein to mean including the method blocks or elements identified, but that such blocks or elements do not comprise an exclusive list and a method or apparatus may contain additional blocks or elements.

## Claims

1. A portable support for manipulating cables, comprising:
a horizontal bar (10) having three fasteners (11), wherein each of the three fasteners (11) is configured to support one cable (12); and
a stand attached to the horizontal bar (10), configured to provide distance between the ground (14) and the horizontal bar (10), and to maintain stability of the portable support; and
each of the three fasteners (11) comprises a groove (15) transverse to the horizontal bar (10), configured to receive the cable (12), and a clamp (16) for pressing a cable (12) towards the groove (15), wherein the groove (15) is configured to guide each cable (12) in transverse position to the horizontal bar (10) when tightened into the fasteners (11);
wherein:
the horizontal bar (10) is round;
the groove (15) is formed by two flat surfaces (17, 18) arranged into V-shape opening upwards, being configured to receive the cable (12);
each fastener (11) is attached to the horizontal bar (10) via a tubular member (31) configured to slide over the horizontal bar (10) and the angle of the fastener (11) is adjustable according to the angle in which the tubular member (31) is secured to the horizontal bar (10) with securing means; and
each of the three fasteners (11) is located on a separate tubular member (31) so as to be individually rotatable along the horizontal bar (10).

2. A portable support according to claim 1, **characterized in that** the clamp (16) is configured to tighten the received cable (12) from above; and further comprising tightening means (21) for tightening the clamp (16) towards the groove (15), wherein tightening causes the clamp (16) to press the received cable (12) against the two flat surfaces (17, 18).

3. A portable support according to claim 1, **characterized in that** the clamp (16) comprises:
a clamp body (22);
a pressure pad (23) connected to the clamp body (22); and
tightening means (21) configured to push the pressure pad (23) from the clamp body (22) towards the cable (12).

4. A portable support according to claim 3, **characterized in that** each fastener (11) comprises a vertical bar (26) for providing vertical adjustment for the clamp (16).

5. A portable support according to claim 4, **characterized in that** the clamp body (22) is adjustably connected to the vertical bar (26).

6. A portable support according to claim 3, **characterized in that** the tightening means (21) comprise an adjustable clamping lever (24).

7. A portable support according to any of the claims 3 to 6,
**characterized in that** the tightening means (21) comprise at least one tightening bolt (25) configured to push the pressure pad (23) from the clamp body (22) towards the cable (12).

8. A portable support according to any of the claims 1 to 7,
**characterized in that** the stand comprises foldable legs.

9. A portable support according to any of the claims 1 to 8,
**characterized in that** the stand comprises removable legs.

10. A portable support according to any of the claims 1 to 9,
**characterized in that** the support is configured to receive three medium voltage underground cables.

## Patentansprüche

1. Tragbare Halterung für die Handhabung von Kabeln, umfassend:
eine horizontale Stange (10) mit drei Befestigern (11), wobei jeder der drei Befestiger (11) konfiguriert ist, um ein Kabel (12) bereitzustellen; und eine an der horizontalen Stange (10) angebrachte Stütze, die konfiguriert ist, um einen Abstand zwischen der Erdung (14) und der horizontalen Stange (10) bereitzustellen und die Stabilität der tragbaren Stütze aufrechtzuerhalten; und
jeder der drei Befestiger (11) eine Nut (15) quer zu der horizontalen Stange (10) umfasst, die konfiguriert ist, um das Kabel (12) zu empfangen, und eine Klemme (16), um ein Kabel (12) in Richtung der Nut (15) zu drücken, wobei die Nut (15) konfiguriert ist, um jedes Kabel (12) in transversaler Position zu der horizontalen Stange (10) zu führen, wenn es in den Befestigern (11) festgezogen ist;
wobei:
die horizontale Stange (10) rund ist;
die Nut (15) durch zwei flache Oberflächen (17, 18) gebildet wird, die in V-Form angeordnet sind und sich nach oben öffnen, um das Kabel (12) zu empfangen;
jeder Befestiger (11) an der horizontalen Stange (10) über ein rohrförmiges Element (31) angebracht ist, das konfiguriert ist, um über die horizontale Stange (10) zu gleiten, und der Winkel des Befestigers (11) nach dem Winkel einstellbar ist, in dem das rohrförmige Element (31) an der horizontalen Stange (10) mit Befestigungsmitteln befestigt ist; und
jeder der drei Befestiger (11) auf einem separaten rohrförmigen Element (31) angeordnet ist, sodass er individuell entlang der horizontalen Stange (10) gedreht werden kann.

2. Tragbare Stütze nach Anspruch 1, **dadurch gekennzeichnet, dass** die Klemme (16) konfiguriert ist, um das empfangene Kabel (12) von oben zu spannen; und ferner Spannmittel (21) zum Spannen der Klemme (16) in Richtung der Nut (15) umfasst, wobei das Spannen bewirkt, dass die Klemme (16) das empfangene Kabel (12) gegen die beiden flachen Oberflächen (17, 18) drückt.

3. Tragbare Stütze nach Anspruch 1, **dadurch gekennzeichnet, dass** die Klammer (16) Folgendes umfasst:
einen Klemmkörper (22);
ein mit dem Klammerkörper (22) verbundenes Druckpad (23); und
Spannmittel (21), die konfiguriert sind, um das Druckpad (23) vom Klemmenkörper (22) in Richtung des Kabels (12) zu drücken.

4. Tragbare Stütze nach Anspruch 3, **dadurch gekennzeichnet, dass** jeder Befestiger (11) eine vertikale Stange (26) umfasst, um eine vertikale Einstellung für die Klemme (16) bereitzustellen.

5. Tragbare Stütze nach Anspruch 4, **dadurch gekennzeichnet, dass** der Klemmkörper (22) verstellbar mit der vertikalen Stange (26) verbunden ist.

6. Tragbare Stütze nach Anspruch 3, **dadurch gekennzeichnet, dass** die Spannmittel (21) einen verstellbaren Spannhebel (24) umfassen.

7. Tragbare Stütze nach einem der Ansprüche 3 bis 6, **dadurch gekennzeichnet, dass** die Spannmittel (21) mindestens eine Spannschraube (25) umfassen, die konfiguriert ist, um das Druckpad (23) vom Klemmkörper (22) in Richtung des Kabels (12) zu drücken.

8. Tragbare Stütze nach einem der Ansprüche 1 bis 7, **dadurch gekennzeichnet, dass** der Ständer einklappbare Beine umfasst.

9. Tragbare Stütze nach einem der Ansprüche 1 bis 8, **dadurch gekennzeichnet, dass** der Ständer entfenbare Beine umfasst.

10. Tragbare Stütze nach einem der Ansprüche 1 bis 9, **dadurch gekennzeichnet, dass** die Stütze konfiguriert ist, um drei Mittelspannungserdkabel zu empfangen.

## Revendications

1. Support portable destiné à la manipulation de câbles, comprenant :
une barre horizontale (10) ayant trois éléments de fixation (11), dans lequel chacun des trois éléments de fixation (11) est conçu pour supporter un câble (12) ;
et un support fixé à la barre horizontale (10), conçu pour créer un écart entre le sol (14) et la barre horizontale (10), et pour assurer la stabilité du support portable ; et
chacun des trois éléments fixation (11) comprend une rainure (15) transversale par rapport à la barre horizontale (10), conçue pour recevoir le câble (12), et une pince (16) destinée à presser un câble (12) vers la rainure (15), dans lequel la rainure (15) est conçue pour guider chaque câble (12) dans une position transversale par rapport à la barre horizontale (10) lorsqu'il est serré dans les éléments de fixation (11) ;
dans lequel :
la barre horizontale (10) est ronde ;
la rainure (15) est formée par deux surfaces planes (17, 18) agencées en forme de V ouvert vers le haut, et est conçue pour recevoir le câble (12) ;
chaque élément de fixation (11) est fixé à la barre horizontale (10) par l'intermédiaire d'un élément tubulaire (31) conçu pour coulisser sur la barre horizontale (10), et l'angle de l'élément de fixation (11) est réglable selon l'angle sous lequel l'élément tubulaire (31) est fixé à la barre horizontale (10) à l'aide de moyens de fixation ; et
chacun des trois éléments fixation (11) est placé sur un élément tubulaire distinct (31) de manière à pouvoir pivoter individuellement le long de la barre horizontale (10).

2. Support portable selon la revendication 1, **caractérisé en ce que** la pince (16) est conçue pour serrer le câble reçu (12) par le haut ; et comprenant en outre un moyen de serrage (21) destiné à serrer la pince (16) vers la rainure (15), dans lequel le serrage amène la pince (16) à presser le câble reçu (12) contre les deux surfaces planes (17, 18).

3. Support portable selon la revendication 1, **caractérisé en ce que** la pince (16) comprend :
un corps de pince (22) ;
un patin de pression (23) relié au corps de pince (22) ; et
un moyen de serrage (21) conçu pour pousser le patin de pression (23) du corps de pince (22) vers le câble (12).

4. Support portable selon la revendication 3, **caractérisé en ce que** chaque élément de fixation (11) comprend une barre verticale (26) fournissant un réglage vertical de la pince (16).

5. Support portable selon la revendication 4, **caractérisé en ce que** le corps de pince (22) est relié de manière réglable à la barre verticale (26).

6. Support portable selon la revendication 3, **caractérisé en ce que** les moyens de serrage (21) comprennent un levier de serrage réglable (24).

7. Support portable selon l'une quelconque des revendications 3 à 6, **caractérisé en ce que** les moyens de serrage (21) comprennent au moins un boulon de serrage (25) conçu pour pousser le patin de pression (23) du corps de pince (22) vers le câble (12).

8. Support portable selon l'une quelconque des revendications 1 à 7, **caractérisé en ce que** le support comprend des pieds repliables.

9. Support portable selon l'une quelconque des revendications 1 à 8, **caractérisé en ce que** le support comprend des pieds amovibles.

10. Support portable selon l'une quelconque des revendications 1 à 9, **caractérisé en ce que** le support est conçu pour recevoir trois câbles souterrains moyenne tension.
